(19) Europäisches Patentamt
European Patent Office
Office européen des brevets

(11) **EP 2 857 716 B1**

(12) **EUROPÄISCHE PATENTSCHRIFT**

(45) Veröffentlichungstag und Bekanntmachung des Hinweises auf die Patenterteilung:
**11.07.2018   Patentblatt 2018/28**

(51) Int Cl.:
*F16F 13/26* *(2006.01)*     *F16F 15/02* *(2006.01)*

(21) Anmeldenummer: **14001807.8**

(22) Anmeldetag: **22.05.2014**

(54) **Feder-Dämpfer-System zur Verwendung in Lagern oder als Dämpfer**

Spring-damper system used in a support or a damper

Système ressort-amortisseur pour utilisation comme support ou amortisseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2013   DE 102013016078**

(43) Veröffentlichungstag der Anmeldung:
**08.04.2015   Patentblatt 2015/15**

(73) Patentinhaber: **MAN Truck & Bus AG
80995 München (DE)**

(72) Erfinder: **Hoffmann, Jörg
90453 Nürnberg (DE)**

(74) Vertreter: **v. Bezold & Partner Patentanwälte - PartG mbB
Akademiestraße 7
80799 München (DE)**

(56) Entgegenhaltungen:
**CN-A- 101 865 237     DE-A1-102005 045 992
US-A1- 2009 212 473     US-A1- 2010 072 760
US-A1- 2013 228 404**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Feder-Dämpfer-System zur Verwendung in Lagern oder als Dämpfer, insbesondere ein aktives Feder-Dämpfer-System für aktive Lagerungen. Die Erfindung betrifft ferner ein schwingungsdämpfendes Lager, insbesondere ein aktives Lager.

In nahezu allen Bereichen der Technik treten Schwingungsprobleme auf, die es zu lösen gilt, beispielsweise durch Entkopplung einer Teilstruktur von ihrer vibrierenden Umgebung. Ein Beispiel hierfür ist die Lagerung von Antriebsaggregaten in Fahrzeugen, die eine Übertragungsstelle für Vibrationen und Körperschall darstellt. Um zu verhindern, dass sich störende Vibrationen und Geräusche ausbreiten, sind aus dem Stand der Technik unterschiedlich ausgebildete Vorrichtungen zur Schwingungsdämpfung bzw. -isolierung bekannt, die unter Verwendung elastischer und/oder dämpfender Materialien eine rein passive Schwingungswirkung entfalten, deren Nachteile jedoch darin liegen, dass keine Adaption an sich wechselnde Systemeigenschaften zur Aufrechterhaltung einer möglichst optimalen Schwingungsdämpfung bzw. -isolierung möglich ist.

Neben rein passiv ausgebildeten schwingungsdämpfenden bzw. -isolierenden Systemen finden zunehmend mechatronische und adaptronische Lösungen Anwendung, um aktive Lager zu realisieren. Aktive Lager sind technisch zwar aufwändiger als passive Lagerungen, bieten jedoch die Möglichkeit einer breitbandigen Reduktion von Schwingungen und der gezielten Beeinflussung des Übertragungsverhaltens, beispielsweise durch gezielte Einkopplung von Gegenschwingungen oder gezielte Änderungen der Dämpfungs- oder Schwingungseigenschaften des Systems. Derartige aktive Lager, insbesondere für die Motorlagerung, sind beispielsweise aus der DE. 10 2005 029 234 A1 und aus der MTZ - Motortechnische Zeitschrift, Ausgabe 1/2013, 74. Jahrgang, S. 55 - 59 bekannt. Hierbei ist das aktive Lager bzw. das aktive Feder-Dämpfer-System jeweils zwischen Motor und Motorrahmen angeordnet.

Nachteilig an derartigen Feder-Dämpfer-Systemen bzw. Lagerungen ist der vergleichsweise große Bauraum, der für die Verwendung dieser Systeme erforderlich ist. Daher wird bei kleinem zur Verfügung stehenden Bauraum, wie beispielsweise bei Motorlagerungen, oftmals auf den Einsatz aktiver Lagerungen verzichtet oder diese nicht an allen Lagerstellen bzw. nicht in allen Raumrichtungen vorgesehen. Ein Ansatz, bei beschränkten Platzverhältnissen die Aktorik für das aktive Feder-Dämpfer-System entsprechend kleiner auszubilden, ist jedoch in der Regel mit nachteiligen Beschränkungen betreffend die verfügbare Maximalkraft und Maximalverschiebung und/oder Robustheit bzw. Haltbarkeit verbunden.

Aus der CN 101 865 237 A und der US 2010/072760 A1 sind hydraulische Dämpfersysteme bekannt, bei denen eine hydraulische Zylinderkolbenanordnung mit einem Hydraulikmotor und einem elektrischen Generator verbunden ist, um Dämpfungsenergie zum Teil in elektrische Energie umzuwandeln. Aus der DE 10 2005 045 992 A1 ist eine Vorrichtung zur Verhinderung von Schwingungsresonanzen bekannt, die zum hydraulischen Abstützen eines Schiffsmotors verwendet werden kann.

Eine Aufgabe der Erfindung ist es, ein Feder-Dämpfer-System zur Verwendung in Lagern oder als Dämpfer, insbesondere für Motorlagerungen, bereitzustellen, das Nachteile herkömmlicher Feder-Dämpfer-Systeme vermeidet. Das Feder-Dämpfer-System soll insbesondere auch bei beengten Platzverhältnissen zwischen einer zu lagernden Last und einer Abstützeinrichtung zur Aufnahme der Last anordenbar sein, ohne Nachteile bei den Dämpfungs- bzw. Federungseigenschaften in Kauf nehmen zu müssen. Eine weitere Aufgabe der Erfindung ist es, ein Lager, insbesondere ein aktives Lager, bereitzustellen, das Nachteile herkömmlicher Lager vermeidet.

Diese Aufgaben werden jeweils durch ein Feder-Dämpfer-System zur Verwendung in Lagern oder als Dämpfer mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung umfasst die allgemeine technische Lehre, den Feder-Dämpfer-Mechanismus eines Feder-Dämpfer-Systems sowie, im Falle eines aktiven Feder-Dämpfer-Systems, die Aktorik und Sensorik des Feder-Dämpfer-Mechanismus räumlich getrennt von der eigentliche Lagerstelle anzuordnen und den an der Lagerstelle auftretenden Lasteintrag, insbesondere die Lagerkraft und die Lagerverschiebung, an den Feder-Dämpfer-Mechanismus zu übertragen und dessen Reaktion an die Lagerstelle zu übertragen bzw. rückzukoppeln.

Erfindungsgemäß wird hierzu ein Feder-Dämpfer-System zur Verwendung in Lagern oder als Dämpfer vorgeschlagen, umfassend eine Kopplungsvorrichtung, die an einer Lager- oder Dämpfungsstelle mit einer Last und einer Abstützeinrichtung koppelbar ist, um die Last auf der Abstützeinrichtung schwingbar zu lagern.

Gemäß einem hervorgehobenen Ausführungsbeispiel, auf das nachfolgend wiederholt Bezug genommen wird, ist die Last beispielsweise ein Motor eines Kraftfahrzeugs und die Abstützeinrichtung der Rahmen, auf dem der Motor gelagert ist. Das erfindungsgemäße Feder-Dämpfer-System ist jedoch nicht auf die Verwendung für die Motorlagerung beschränkt, wie nachfolgend noch ausführlicher erläutert wird.

Die Kopplungsvorrichtung ist ausgebildet, einen von der Last erzeugten Lasteintrag im Wesentlichen verlustfrei auf eine Feder-Dämpfer-Vorrichtung zu übertragen. Die Kopplungsvorrichtung ist ferner ausgebildet, eine entsprechende federnde und/oder dämpfende Reaktion der Feder-Dämpfer-Vorrichtung auf den Lasteintrag von der Feder-Dämpfer-Vorrichtung aufzunehmen und an die Last rückzukoppeln, um dem Lasteintrag schwingungsdämpfend entgegenzuwirken.

Die Feder-Dämpfer-Vorrichtung bildet hierbei den Feder-Dämpfer-Mechanismus des Feder-Dämpfer-Systems aus und hat federnde und dämpfende Eigenschaften. Die Feder-Dämpfer-Vorrichtung ist ferner räumlich getrennt von der Lager- oder Dämpfungsstelle anordenbar und/oder angeordnet.

Die Kopplungsvorrichtung dient somit als Übersetzungsmechanismus, um den Lasteintrag an der Lagerstelle möglichst verlustfrei an die beabstandete Feder-Dämpfer-Vorrichtung zu übertragen, und steht mit dieser in bidirektionaler Wirkverbindung.

Die Ausbildung der Kopplungsvorrichtung derart, dass diese den Lasteintrag im Wesentlichen verlustfrei auf die Feder-Dämpfer-Vorrichtung überträgt, bedeutet, dass die Kopplungsvorrichtung selbst zumindest in einem gewissen Frequenzbereich (z. B. 0-100 Hz) über keine wesentlichen Dämpfungseigenschaften verfügt. Mit anderen Worten ist die Kopplungsvorrichtung so ausgeführt, dass sie bis auf die konstruktionsbedingt nie gänzlich vermeidbaren Reibungsverluste zumindest in einem gewissen Frequenzbereich keine dämpfende Eigenschaft besitzt.

Die Anordnung der Feder-Dämpfer-Vorrichtung räumlich getrennt von der Lager- oder Dämpfungsstelle bedeutet, dass diese außerhalb eines zwischen der Last und der Abstützeinrichtung ausgebildeten Zwischenraums, d. h. außerhalb des schwingenden Bereichs, anordenbar ist.

Die vorliegende Erfindung ermöglicht somit, die Entstehung des Lasteintrags bzw. die Lagerstelle von dem Feder-Dämpfer-Mechanismus räumlich zu trennen. Dadurch kann das Feder-Dämpfer-System an einer geeigneten Stelle mit genügend Bauraum angeordnet werden und ist in ihrer konstruktiven Ausgestaltung nicht durch den häufig beschränkten Bauraum zwischen Last und Abstützeinrichtung eingeschränkt. Gemäß einer besonders bevorzugten Ausführungsform ist die Feder-Dämpfer-Vorrichtung als Sensor-Aktoreinheit ausgebildet und eingerichtet, den übertragenen Lasteintrag zu erfassen und dem übertragenen Lasteintrag aktorisch entgegenzuwirken. Ein besonderer Vorzug der Erfindung liegt somit darin, dass ein aktives Feder-Dämpfer-System zur Verwendung in aktiven Lagern bereitgestellt werden kann, bei dem die konstruktive Ausgestaltung, insbesondere die Abmessung der Sensor-Aktoreinheit, nicht durch einen beschränkten Bauraum an der Lagerstelle eingeschränkt ist.

An der Lagerstelle selbst wird lediglich ein Übersetzungsmechanismus für den Lasteintrag angeordnet, der den Lasteintrag an die entfernt angeordnete Feder-Dämpfer-Vorrichtung bzw. die Sensor-Aktoreinheit weiterleitet. Dadurch ist der erforderliche Raumbedarf an der Lagerstelle erheblich reduziert, wodurch das erfindungsgemäße aktive Feder-Dämpfer-System als aktives Lager für Lagerstellen verwendet werden kann, wo bisher der Einsatz eines leistungsstarken aktiven Lagers nicht möglich war.

Ein weiterer Vorteil ist, dass die bewegte Masse an der Lagerstelle selbst klein gehalten werden kann. Ferner ist es möglich, größere Feder-Dämpfer-Elemente bzw. größere Aktoren vorzusehen, die leistungsstärker, robuster und kostengünstiger zu realisieren sind. Ein besonderer Vorzug liegt zudem darin, dass die empfindliche Aktorik und Sensorik besser vor Umwelt- und anderen Störeinflüssen, die sonst an der Lagerstelle auftreten, geschützt werden können. Durch Ausbildung der Feder-Dämpfer-Vorrichtung als Sensor-Aktoreinheit wird somit ein dynamisch-adaptives Feder-Dämpfer-System bereitgestellt, dessen Feder- bzw. Dämpfungseigenschaften statisch und/oder dynamisch geändert werden können und das durch die Möglichkeit, die Sensor-Aktoreinheit räumlich getrennt von der Lagerstelle anzuordnen, sehr flexibel eingesetzt werden kann.

Vorzugsweise umfasst die als Sensor-Aktoreinheit ausgebildete Feder-Dämpfer-Vorrichtung einen ersten Sensor, der ausgeführt ist, eine von einer Lagerkraft des Lasteintrags abhängige erste Steuergröße zu bestimmen. Weiter vorzugsweise umfasst die Feder-Dämpfer-Vorrichtung einen zweiten Sensor, der ausgeführt ist, eine von einer Lagerverschiebung des Lasteintrags abhängige zweite Steuergröße zu bestimmen. In Abhängigkeit der bestimmten ersten Steuergröße und/oder zweiten Steuergröße ist die Feder-Dämpfer-Vorrichtung ausgeführt, die Dämpfungseigenschaften und/oder die Federungseigenschaften der Feder-Dämpfer-Vorrichtung zu verändern und/oder aktiv eine Gegenkraft zum übertragenen Lasteintrag zu erzeugen. Die sensorisch erfassten, vom Lasteintrag abhängigen Steuergrößen werden somit verwendet, um die Feder-Dämpfer-Vorrichtung aktorisch zu steuern. Erfindungsgemäß umfasst die Kopplungsvorrichtung einen ersten fluidischen Hubzylinder, der an der Lager- oder Dämpfungsstelle angeordnet ist, und einen zweiten fluidischen Hubzylinder, der an der Feder-Dämpfer-Vorrichtung angeordnet ist, wobei die beiden fluidischen Hubzylinder über eine erste Fluidleitung bewegungsgekoppelt sind. Der zweite am Feder-Dämpfer-System angeordnete Hubzylinder ist zudem fluidisch mit dem Feder-Dämpfer-System gekoppelt und steht mit diesem in Wirkverbindung.

Bei einer vorteilhaften Variante dieser Ausgestaltungsform sind die fluidischen Hubzylinder als Hydraulikzylinder ausgebildet und enthalten ein inkompressibles, niedrigviskoses Fluid, so dass keine Dämpfungsverluste bei der Aufnahme und Übertragung des Lasteintrags an die Feder-Dämpfer-Vorrichtung entstehen.

Es ist jedoch auch möglich, die beiden Hubzylinder sowie die Fluidleitung pneumatisch auszubilden.

Gemäß diesen Varianten ist der erste Sensor als Drucksensor ausgebildet, und die Feder-Dämpfer-Vorrichtung ist eingerichtet, als erste Steuergröße einen Fluiddruck $p$ im zweiten Hubzylinder zu bestimmen, wobei der im zweiten Hubzylinder gemessene Fluiddruck $p$ abhängig von der übertragenen Lagerkraft $F$ ist, die auf den ersten Hubzylinder an der Lagerstelle von der Last ausgeübt wird.

Ferner kann der zweite Sensor als zweite Steuergröße einer Federweg s der Feder-Dämpfer-Vorrichtung erfassen, wobei der Federweg s abhängig ist von einer an der Lagerstelle auftretenden Lagerverschiebung.

Gemäß einer weiteren Ausführungsform ist ein Fluidreservoir vorgesehen, das mit einem durch die ersten und zweiten Hubzylinder und der ersten Fluidleitung gebildeten Fluidkreis zu Variierung des Fluidvolumens im Fluidkreis verbindbar ist. Dadurch wird eine Niveauregulierung des Feder-Dämpfer-Systems ermöglicht, ohne die dynamischen Eigenschaften des Feder-Dämpfer-Systems zu verändern. Bei Verwendung des Feder-Dämpfer-Systems als Lager kann dadurch die Sollhöhe der zu lagernden Last auf ein gewünschtes Niveau eingestellt bzw. angepasst werden.

Gemäß einer weiteren Variante ist zusätzlich zu der ersten, vorstehend beschriebenen Fluidleitung eine zweite Fluidleitung vorgesehen, über welche die ersten und zweiten Hubzylinder ebenfalls bewegungsgekoppelt sind, wobei die erste Fluidleitung und die zweite Fluidleitung jeweils auf gegenüberliegenden Seiten des Hubkolbens der Hubzylinder in die Hubzylinder münden. Diese Ausgestaltungsform verbessert das Übertragungsverhalten der Kopplungsvorrichtung, da hierdurch eine Übertragung des Lasteintrags ausschließlich durch Druck auf das Fluid ermöglicht wird, wodurch größere Kräfte bzw. Beschleunigungen übertragen werden können.

Zudem vermeidet diese Ausführungsvariante, dass bei einer schnellen Kolbenbewegung ein abrupter Druckabfall auftreten kann, wodurch Hydrauliköl verdampft und dadurch eine ungewünschte Volumenänderung erfolgt. Dieser Effekt kann bei der Ausführungsvariante mit nur einer Fluidleitung, wo sich jeweils nur auf einer Seite des Kolbens Öl befindet, auftreten. Durch Vorsehen des Fluids auf beiden Seiten des Kolbens und eine Übertragung des Lasteintrags durch zwei Fluidleitungen, die jeweils an gegenüberliegenden Endbereichen des Kolbens in die Hubzylinder münden, kann die Kolbenbewegung somit direkter und zuverlässiger übertragen werden.

Weiterhin ist es vorteilhaft, den ersten und/oder den zweiten Hubzylinder vorzuspannen. Dies kann beispielsweise mit einem üblichen Federelement erfolgen, das den Kolben des Hubzylinders in einer Ausgangsposition vorspannt, um eine gewünschte Ruheposition einzustellen. Ein weiterer Vorteil dieser Anordnung ist, dass dadurch ein Sicherheitsmechanismus bereitgestellt wird, um ein unkontrolliertes Absacken des Motors bei einem Leck in der Fluidleitung zu vermeiden.

Ein besonderer Vorzug der Erfindung liegt ferner darin, dass die räumlich getrennt angeordnete Feder-Dämpfer-Vorrichtung und die Kopplungsvorrichtung an einer Mehrzahl von Lager- oder Dämpfungsstellen mit der Last und der Abstützeinrichtung koppelbar sind. Mit anderen Worten ist es somit möglich, mit nur einer Feder-Dämpfer-Vorrichtung eine Last an mehreren Lagerstellen schwingungsdämpfend zu lagern, wodurch eine platzsparende und kostengünstige Lagerung ermöglicht wird.

Gemäß einer vorteilhaften Variante dieser Ausgestaltungsform umfasst die Kopplungsvorrichtung hierzu eine Mehrzahl von ersten Hubzylindern, die jeweils an verschiedenen Lager- oder Dämpfungsstellen mit der Last und der Abstützeinrichtung koppelbar sind. Hierbei ist jeder dieser ersten Hubzylinder, der jeweils an einer Lagerstelle angeordnet ist, über eine Fluidleitung mit dem gleichen zweiten Hubzylinder fluidisch gekoppelt, der an der Feder-Dämpfer-Vorrichtung angeordnet ist. Bei n Lagerstellen bzw. n ersten Hubzylindern besteht somit eine 1:n-Beziehung zwischen dem zweiten Hubzylinder bzw. dem Feder-Dämpfer-System und den n ersten Hubzylindern, die an den n Lagerstellen angeordnet sind.

Hierbei ist es möglich, die Mehrzahl von ersten Hubzylindern in Parallelschaltung fluidisch mit dem zweiten Hubzylinder bewegungszukoppeln. Hierbei wird ein konstantes Verhältnis der Lagerkräfte $F_1/F_2/.../F_n = A_1/A_2/.../A_n$ ermöglicht, wobei wobei $A_i$ die dem Fluid zugewandte Kolbenfläche des Hubzylinders i an der Lagerstelle i ist und $F_i$ die Lagerkraft an der Lagerstelle i ist. Dadurch können eine Minimierung der Lagerkräfte, eine Optimierung der Krafteinleitung, beispielsweise in den Fahrzeugrahmen, und eine optimale Gewichtsverteilung erzielt werden.

Gemäß einer weiteren Ausführungsvariante ist es jedoch auch möglich, die Mehrzahl von ersten Hubzylindern in Reihenschaltung fluidisch mit dem zweiten Hubzylinder bewegungszukoppeln. Diese Ausführungsform kann beispielsweise zur Wankstabilisierung eingesetzt werden, da das Verhältnis der Lagerverschiebungen $z_1 * A_1 = z_2 * A_2 = ... = z_n * A_n$ konstant ist, wobei $A_i$ wiederum die dem Fluid zugewandte Kolbenfläche des Hubzylinders i an der Lagerstelle i ist und $z_i$ die Lagerverschiebung an der Lagerstelle i ist.

Eine vorteilhafte Ausgestaltungsform dieser Variante sieht ferner vor, ein separates Fluidreservoir an jedem der n ersten Hubzylinder vorzusehen, so dass eine autonome Niveauregulierung an jeder Lagerstelle ermöglicht wird. Dies ermöglicht auch bei einer ungleichen Lastverteilung auf einer gelagerten Ladefläche eine Lagerung mit paralleler Ausrichtung der Ladefläche zur Abstützeinheit, indem durch gezielte Niveauanpassung des Fluidvolumens an den einzelnen Lagerstellen die ungleiche Lastverteilung kompensiert wird.

Es wird betont, dass unter einer Feder-Dämpfer-Vorrichtung im Sinne dieser Erfindung eine Vorrichtung verstanden werden soll, die federnde und dämpfende Eigenschaften aufweist. Es wird ferner betont, dass eine Federeigenschaft und eine Dämpfungseigenschaft der Feder-Dämpfer-Vorrichtung jeweils durch getrennte Bauteile oder nur durch ein Bauteil bereitgestellt werden können. So besitzen beispielsweise Elastomere oder Gummi sowohl Elastizitäts-, d. h. Federungs-, als auch Dämpfungseigenschaften und können als einteilige Feder-Dämpferelemente ausgebildet sein. Alternativ kann die Feder-Dämpfer-Vorrichtung ein erste Bauteil enthalten, das überwiegend die dämpfenden Eigenschaften des Systems bereitstellt, und ein zweites Bauteil, das überwiegend die federnden Eigenschaften des Systems bereitstellt.

Bei einer Ausgestaltung des Feder-Dämpfer-Systems als Sensor-Aktoreinheit sind das Dämpfungselement und/oder das Federelement dynamisch verstellbar. Das Dämpfungselement kann beispielsweise als elektrorheologisch oder magnetorheologisch arbeitendes Dämpfungselement ausgebildet sein. Ferner kann das Federelement mit dynamisch verstellbarer Härte vorgesehen sein, beispielsweise in Form einer mechanischen Feder mit variabler Vorspannung oder in Form einer Gasfeder mit variablem Volumen oder Füllmenge.

Die Ausgestaltung der Feder-Dämpfer-Vorrichtung ist jedoch nicht auf die vorgenannten Beispiele beschränkt. Unter einer Feder-Dämpfer-Vorrichtung im Sinne dieser Erfindung sollen allgemein mechanische und mechatronische Systeme zur Realisierung einer Kraft-Weg-Kennlinie fallen, die ausgebildet sind, eine Kraft-Weg-Reaktion zu erzeugen, die über die Kopplungsvorrichtung an die Lagerstelle rückgekoppelt werden kann. Weitere Ausführungsformen der Feder-Dämpfer-Vorrichtung können daher beispielsweise mittels einer Schwingspule, einem Hubmagneten und/oder Piezo-Aktoren realisiert werden, die entsprechend aktorisch gesteuert werden, um die gewünschten Feder- bzw. Dämpfungseigenschaften bereitzustellen. Ebenso ist es möglich, die gewünschten Feder- bzw. Dämpfungseigenschaften durch geeignete Ansteuerung z. B. eines Linearmotors zu erzeugen. Die Feder-Dämpfer-Vorrichtung kann daher als Linearmotor ausgebildet sein.

Ferner ist die Kopplungsvorrichtung nicht auf die vorgenannten Ausführungsbeispiele basierend auf der Verwendung von fluidisch gekoppelten Hubzylindern beschränkt, sondern kann auch durch andere geeignete zumindest in einem gewissen Frequenzbereich verlustfreie bzw. -arme Übertragungsmechanismen, beispielsweise durch ein mechanisches Hebelwerk, realisiert werden.

Besonders vorteilhaft ist, wie vorstehend erwähnt, die Verwendung des vorgenannten Feder-Dämpfer-Systems in Motorlagern, so dass die Abstützeinrichtung ein Motorrahmen und die Last ein Motor ist. Ebenso möglich ist die Verwendung des Feder-Dämpfer-Systems zur Fahrwerkslagerung, wobei die Abstützeinrichtung eine Fahrzeugkarosserie und die Last ein Fahrwerk ist. Eine weitere Anwendungsmöglichkeit betrifft die Lagerung von Ladeflächen, Fahrerhäusern oder anderen vom Rest des Fahrzeugs zu entkoppelnden Fahrzeugkomponenten. Das erfindungsgemäße Feder-Dämpfer-System kann auch als Dämpfer verwendet werden, beispielsweise für Fahrzeugsitze, wobei die Abstützeinrichtung eine Tragstruktur für einen Fahrzeugsitz ist. Die vorliegende Erfindung ist aber nicht auf diese Anwendungen beschränkt, sondern kann prinzipiell für vielfältige Lagerungen, insbesondere bei Maschinen oder Montage- oder Transportvorrichtungen, zum Einsatz kommen.

Die Erfindung betrifft ferner ein aktives schwingungsdämpfendes Lager mit einem Feder-Dämpfer-System nach einem der vorstehend beschriebenen Aspekte, insbesondere ein Motorlager, ein Fahrwerkslager oder ein Maschinenlager.

Weitere Einzelheiten und Vorteile der Erfindung werden im Folgenden unter Bezug auf die beigefügten Zeichnungen beschrieben. Es zeigen:

Figur 1 eine schematische Darstellung eines Motorlagers gemäß einem Ausführungsbeispiel;

Figur 2 eine schematische Darstellung eines weiteren Ausführungsbeispiels;

Figur 3 eine schematische Darstellung eines weiteren Ausführungsbeispiels;

Figur 4 eine schematische Darstellung eines weiteren Ausführungsbeispiels;

Figur 5 eine schematische Darstellung eines weiteren Ausführungsbeispiels;

Figur 6 eine schematische Darstellung eines weiteren Ausführungsbeispiels; und

Figur 7 eine schematische Darstellung eines weiteren Ausführungsbeispiels; und

Figur 8 eine schematische Darstellung einer Lagerstelle mit mehreren Freiheitsgraden.

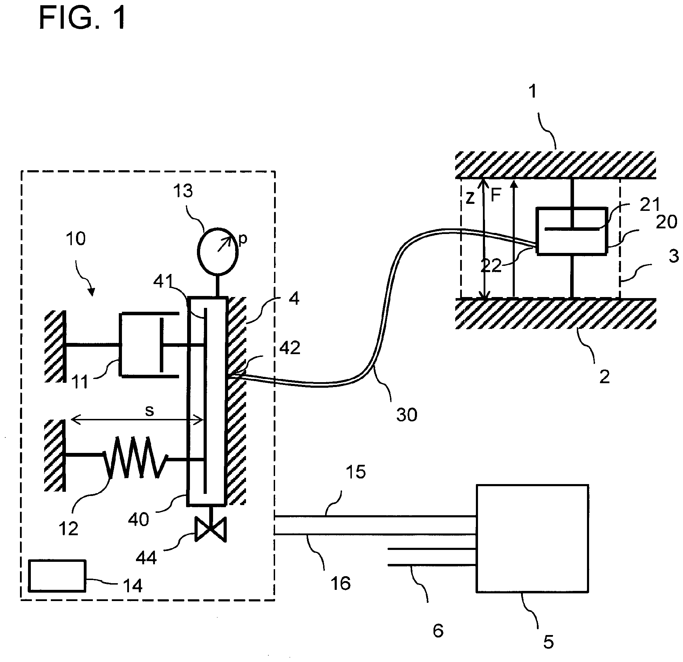

Die Figur 1 zeigt ein erstes Ausführungsbeispiel eines Feder-Dämpfer-Systems zur Verwendung als schwingungsdämpfendes Motorlager. Hierbei ist ein Kraftfahrzeugmotor 1 an einem Rahmen 2 über einen hydraulischen Hubzylinder 20 abgestützt und in Längsrichtung des Hubzylinders 20 schwingbar gelagert. Der Hydraulikzylinder 20 ist hierbei im kritischen Bauraum zwischen einer Last, z. B. einem Motor 1 und einer schwingungssteifen Abstützstruktur, z. B. ein Rahmen 2 angeordnet und sowohl mit dem Motor 1 als auch mit dem Rahmen 2 bewegungsgekoppelt, um den Motor schwingbar auf dem Rahmen 2 zu lagern.

Die durch den ersten Hydraulikzylinder 20 gebildete Lagerstelle 3 ist durch die gestrichelte Linie in Figur 1 gekennzeichnet. Das durch den Hydraulikzylinder 20 gebildete Lager ist einer Lagerkraft F zwischen der Last 1 und dem Rahmen 2 ausgesetzt und einer dadurch bedingten Lagerverschiebung z, die in Figur 1 jeweils durch die mit z und F gekennzeichneten Pfeile schematisch dargestellt sind.

Im Hydraulikzylinder 20 befindet sich in dem vom Zylinderkolben 21 und dem unteren Ende des Hydraulikzylinders 20 begrenzten Innenvolumen ein inkompressibles, niedrigviskoses Fluid, beispielsweise ein dünnes Hydrauliköl. Eine Hydraulikleitung 30 mündet in den unteren Endbereich 22 des Hydraulikzylinders 20. Eine Lagerverschiebung z durch eine Bewegung des Motors 1 hin zum Rahmen 2 führt zu einer Bewegung des Kolbens 21 des ersten Hydraulikzylinders 20 nach unten und führt zu einer entsprechenden Verdrängung des Fluids im Zylinder, das über die Hydraulikleitung 30 ausströmt. Korrespondierend bewirkt eine eine Bewegung des Motors 1 weg vom Rahmen 2 zu einer Bewegung des Kolbens 21 des ersten Hydraulikzylinders 20 nach oben und ein entsprechendes Einströmen des Fluids in den Zylinder 20.

Über die Hydraulikleitung 30 ist der erste Hydraulikzylinder 20 mit einem zweiten Hydraulikzylinder 40 fluidisch gekoppelt, wobei die Fluidleitung 30 in einen Endbereich 42 des zweiten Hydraulikzylinders mündet. Eine Bewegung des Kolbens 21 des ersten Hydraulikzylinders 20, die zu einer Verringerung des Fluidvolumens im ersten Hubzylinder 20 führt, bewirkt eine entsprechende Zunahme des Fluids im zweiten Fluidzylinder 40 und dort zu einer korrespondierenden Bewegung des Hubkolbens 41 des zweiten Hydraulikzylinders 40.

Hierbei stellt im vorliegenden Ausführungsbeispiel die Durchtrittsöffnung 22 die einzige Fluidöffnung dar, über die das Fluid aus dem ersten Hydraulikzylinder 20 austreten kann. Insbesondere weist die Druckfläche des Kolbens 21 keine Durchtrittsöffnung auf, wie es sonst bei Hydraulikkolben mit dämpfenden Eigenschaften üblich ist. Entsprechendes gilt für die Durchtrittsöffnung 42 und den Kolben 41 des zweiten Hydraulikzylinders 40.

Die fluidische Kopplung der beiden Hydraulikzylinder 20 und 40 bedingt somit, dass eine Bewegung des Kolbens 21 im ersten Hydraulikzylinder 20 eine entsprechende Bewegung des Kolbens 41 des zweiten Hubzylinders 40 bewirkt und umgekehrt, so dass der Lasteintrag im Wesentlichen verlustfrei von dem ersten Hydraulikzylinder 20 auf den zweiten Hydraulikzylinder 40 übertragen wird und umgekehrt. Die die beiden Hydraulikzylinder 20, 40 verbindende Fluidleitung 30 ist dabei in ihrer Länge so bemessen, dass der zweite Hydraulikzylinder 40 räumlich getrennt von der Lagerstelle 3, d. h. außerhalb des Zwischenraums zwischen Motor und Rahmen 3, angeordnet werden kann. Beispielsweise kann der zweite Hydraulikzylinder 40 auf einer beabstandeten Abstützeinheit 4 wie beispielsweise einer Fahrzeugkarosserie oder einer Ladefläche oder unterhalb des Fahrzeugrahmens angeordnet sein, wo die Masse der anzuordnenden Teile und der Platzbedarf weniger eingeschränkt sind.

Der zweite Hubzylinder 40 ist an einer Feder-Dämpfer-Vorrichtung 10 angeordnet und mit dieser gekoppelt, so dass der zweite Hubzylinder 40 und die Feder-Dämpfer-Vorrichtung 10 in Wirkverbindung stehen. Die Feder-Dämpfer-Vorrichtung 10 besteht aus einem dämpfenden Element 11 und einem federnden Element 12. Es wird betont, dass es sich bei der Darstellung in Figur 1 um ein schematisches Schaltbild einer Feder-Dämpfer-Vorrichtung 10 und nicht um eine konstruktive Darstellung handelt.

So können die Bewegungsgleichungen von schwingungsgedämpften physikalischen Systemen durch die Schwingungsdifferentialgleichung

$$m\,\ddot{x} + d\dot{x} + kx = 0$$

beschrieben werden, wobei m die Masse, d die Dämpfungskonstante und k die Federkonstante des Systems darstellt. Für viskoelastische Materialien bzw. Bauteile werden diese schwingungsdämpfende Eigenschaften auch mit dem Kelvin-Voigt-Modell beschrieben. Schwingungsgedämpfte Systeme umfassen ein dämpfendes Element, in Figur 1 mit dem Bezugszeichen 11 schematisch dargestellt, dessen dämpfende Eigenschaft durch die Dämpfungskonstante d beschrieben wird und von der Geschwindigkeit x der Schwingung abhängt. Ferner umfassen schwingungsgedämpfte Systeme ein federndes Element, in Figur 1 mit dem Bezugszeichen 12 schematisch dargestellt, dessen federnde Eigenschaft durch die Federkonstante k beschrieben wird und von der Größe der Auslenkung x der Schwingung des Systems abhängt.

Wie vorstehend beschrieben kann eine Feder-Dämpfer-Vorrichtung 10 gewählt werden, bei der die dämpfende Eigenschaft 11 und die federnde Eigenschaft 12 in einem Bauteil verwirklicht ist, beispielsweise durch ein geeignetes Elastomer oder alternativ durch zwei getrennte Bauteile, wobei ein Bauteil im Wesentlichen für die dämpfenden Eigenschaften verantwortlich ist und das andere Bauteil für die federnden Eigenschaften der Feder-Dämpfer-Vorrichtung 10. Beispielsweise kann als Dämpfer ein Hubzylinder mit einer Durchtrittsöffnung im Kolben vorgesehen werden, so dass eine Dämpfung durch eine reibungsbehaftete Überströmung eines Fluids von einer Kolbenseite zur anderen entsteht. Der Dämpfer 11 ist im vorliegenden Ausführungsbeispiel dynamisch verstellbar, beispielsweise ein elektrorheologisch arbeitender Dämpfer. Ferner ist das Federelement 12 als eine Feder mit verstellbarer Härte ausgebildet. Dies kann beispielsweise durch eine mechanische Feder mit variabler Vorspannung oder durch eine Gasfeder mit variablem Volumen oder Füllmenge realisiert werden.

Wird nun die Bewegung des Kolbens 21 des ersten Hydraulikzylinders 20 auf den Kolben 41 des zweiten Hydraulikzylinders 40 übertragen, koppelt der Kolben 41 des zweiten Hydraulikzylinders 40 die Bewegung an die Feder-Dämpfer-Vorrichtung 10. Hierauf wird eine entsprechende Gegenreaktion der Feder-Dämpfer-Vorrichtung 10 erzeugt, die wiederum an den Kolben 41 des zweiten Hubzylinders übertragen und anschließend über die Fluidleitung 30 an den ersten Hydraulikzylinder 20 rückgekoppelt wird. Dadurch wird die Bewegung des ersten Hydraulikzylinders 20 schwingungsgedämpft und folglich eine schwingungsgedämpfte Lagerung des Motors 1 auf dem Rahmen 2 bereitgestellt.

Die Feder-Dämpfer-Vorrichtung 10 ist als Sensor-Aktoreinheit ausgebildet, um den übertragenen Lasteintrag sensorisch zu erfassen und dem übertragenen Lasteintrag aktorisch entgegenzuwirken. Hierbei ist ein Drucksensor 13 vorgesehen, der den Fluiddruck p im zweiten Hydraulikzylinder 40 erfasst. Aus dem gemessenen Fluiddruck p kann auf die an der Lagerstelle wirkende Lagerkraft F rückgeschlossen werden, da der erzeugte Fluiddruck p von der Lagerkraft abhängt ($F = f(p)$). Somit kann über den Drucksensor 13 die Lagerkraft sensorisch erfasst werden. Ferner ist die Feder-Dämpfer-Vorrichtung 10 ausgebildet, einen Federweg s des Federelements 12 zu erfassen. Der Federweg s hängt wiederum von der an der Lagerstelle 3 auftretenden Lagerverschiebung z ab. Abhängig von der Lagerverschiebung z wird ein entsprechendes Fluidvolumen im ersten Hydraulikzylinder 20 verdrängt bzw. aufgenommen, das in den zweiten Hydraulikzylinder 40 einströmt bzw. von dort ausströmt. Dies bewirkt eine entsprechende Verschiebung des Kolbens 41 des zweiten Hydraulikzylinders 40, die an das Federelement 12 übertragen wird und anhand des erfassten Federwegs s erfasst werden kann ($z = g(s)$). Hierzu ist ein Wegsensor 14 vorgesehen, der ausgebildet ist, die Änderung des Federwegs s sensorisch zu erfassen. Anstatt des Federwegs kann alternativ auch das Fluidvolumen erfasst werden, das durch die Hydraulikleitung 30 aufgrund der Bewegung des Kolbens 21 des ersten Hydraulikzylinders 20 strömt.

Der gemessene Druck p und Federweg s werden über Sensorsteuerleitungen 15 an ein Steuergerät 5 übertragen. Das Steuergerät 5 kann an der Feder-Dämpfer-Vorrichtung 10 oder beabstandet hierzu angeordnet sein. Das Steuergerät 5 ist in die CAN-Vernetzung des Gesamtfahrzeugs eingebunden und kann weitere Steuersignale über Steuerleitungen 6 empfangen, beispielsweise ein Drehzahlsignal von der Kurbelwelle und/oder Beschleunigungswerte des Fahrzeugs, beispielsweise aus der ESP-Sensorik. Aus den empfangenen Sensorsignalen 15 errechnet das Steuergerät 5 mittels eines darin gespeicherten Algorithmus und/oder Kennlinien ein Aktorsteuersignal, das über die Aktuatorleitung 16 an die Feder-Dämpfer-Vorrichtung 10 gesendet wird, um diese aktorisch zu steuern.

Insbesondere kann mittels dem Aktuatorsignal eine Gegenkraft in der Feder 12 erzeugt werden, die als Gegenkraft an der Lagerstelle 3 wirkt, um motorseitigen Vibrationen entgegenzuwirken. Beispielsweise können lagerseitig erzeugte Vibrationen durch aktive Erzeugung von Gegenschwingungen mit gleicher Amplitude, aber um 180° phasenverschoben mittels destruktiver Interferenz minimiert werden. Ferner können über das Aktuatorsignal die Federungs- bzw. Dämpfungseigenschaften der Feder-Dämpfer-Vorrichtung 10 dynamisch adaptiert werden. Feder-Dämpfer-Vorrichtungen, die auf diese Weise als Sensor-Aktoreinheit ausgebildet sind, sind an sich aus dem Stand der Technik bekannt und müssen deshalb nicht weiter beschrieben werden.

Das vorliegende Feder-Dämpfer-System ermöglicht somit verschiedene Betriebsmöglichkeiten abhängig davon, wie das Dämpfungselement 11 und das Federelement 12 aktiv geregelt werden. Es können verschiedene Feder-Dämpfer-Charakteristiken erzeugt werden, um beispielsweise eine gewünschte Eigenschaft eines passiven Feder-Dämpfer-Systems nachzustellen. Insbesondere ist es möglich, das Feder-Dämpfer-System auf unterschiedliche Umgebungsbedingungen einzustellen, so dass für eine vorbestimmte Anzahl unterschiedlicher Basissituationen verschiedene Feder-Dämpfer-Charakteristiken vorgesehen und eingeregelt werden können. Beispielsweise kann beim Auftreten von Resonanzschwingungen die Dämpfung stark erhöht werden. Dagegen kann in Situationen, wo die Schwingung des Motors möglichst wenig auf den Rahmen übertragen werden soll und die Anregungsfrequenz erheblich oberhalb der Resonanzfrequenz des schwingungsfähigen Systems liegt, die Dämpfung möglichst gering eingestellt werden. Das Feder-Dämpfer-System könnte ferner vorteilhaft im Falle eines Unfalls genutzt werden, um die Unfallfolgen zu mildern. Ein Unfallereignis kann dem Steuergerät 5 z. B. durch die Sensorik zur Airbagauslösung signalisiert werden. Das Steuergerät 5 kann daraufhin die Feder-Dämpfer-Vorrichtung aktorisch so steuern, dass die Dämpfung in der Fahrbahnebene oder allen Raumrichtungen maximiert wird, um dadurch einen Teil der kinetischen Energie des Fahrzeugs in den Dämpfern in Wärmeenergie zu wandeln und damit die Unfallfolgen zu mildern.

Wie in Figur 1 dargestellt, ermöglicht somit das vorliegende Feder-Dämpfer-System, die eigentlichen federnden und dämpfenden Elemente sowie die Aktorik und die Sensorik von der Lagerstelle 3 mittels Übertragung der Lagerreaktionen zu räumlich trennen, so dass der Platzbedarf an der eigentlichen Lagerstelle möglichst gering gehalten werden kann. Ein weiterer Vorteil ist, dass die Aktorik und Sensorik gekapselt und so angeordnet werden können, dass die bewegte Masse des Schwingungssystems nicht vergrößert wird.

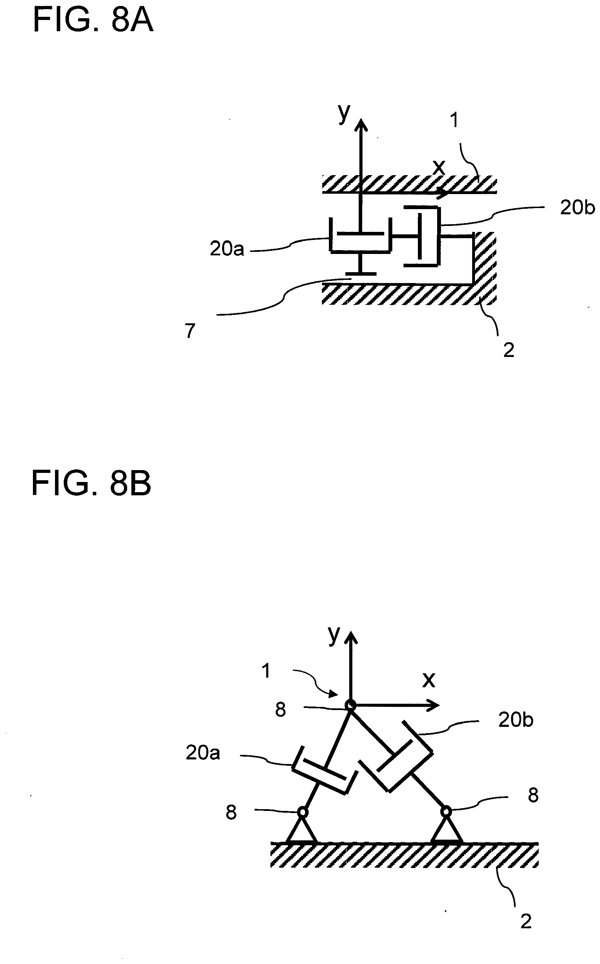

Zur besseren Übersicht ist in Figur 1 nur eine Raumrichtung ausgeführt. Die Erfindung ist dabei hierauf nicht beschränkt. Weitere Freiheitsgrade können durch serielle oder parallele Stapelung mehrerer Systeme oder auch nur der Lagerteile realisiert werden. Dies ist in den Figuren 8A und 8B gezeigt, die einen Übergang von dem in den Figuren 1 bis 7 illustrierten eindimensionalen Fall zu einem zweidimensionalen Fall schematisch illustrieren. Figur 8A zeigt eine Lagerstelle mit zwei seriell gekoppelten Hydraulikzylindern 20a und 20b, um den Motor 1 auf dem Rahmen 2 in x- und y-Richtung beweglich zu lagern. Der erste Hydraulikzylinder 20a ist an dem Motor 1 und dem Rahmen 2 befestigt, wobei der Hydraulikzylinder 20a am Rahmen in einer Linearführung 7 geführt ist, um eine Linearbewegung in x-Richtung zusammen mit dem zweiten Hydraulikzylinder 20b ausführen zu können. Alternativ können die beiden Hydraulikzylinder 20a und 20b auch parallel mit dem Motor 1 und dem Rahmen 2 gekoppelt werden, um den Motor 1 auf dem Rahmen 2 in x- und y-Richtung beweglich zu lagern. Dies ist in Figur 8B dargestellt. Hierbei sind die Endstücke der Hydraulikzylinder 20a und 20b jeweils über Drehgelenke 8 schwenkbar am Motor 1 und dem Rahmen 2 befestigt, so dass die Lagerstelle am oberen Drehgelenk 8 in x- und y-Richtung beweglich ist, wie durch die Pfeile dargestellt. Der Übergang von dem gezeigten zweidimensionalen Fall auf den dreidimensionalen Fall ist analog dem Übergang vom eindimensionalen zum zweidimensionalen Fall realisierbar.

Weitere vorteilhafte Ausführungsvarianten sind in den nachfolgenden Zeichnungen beschrieben. Zur Vermeidung von Wiederholungen werden nachfolgend nur die besonderen bzw. zusätzlichen Merkmale der Ausführungsbeispiele beschrieben.

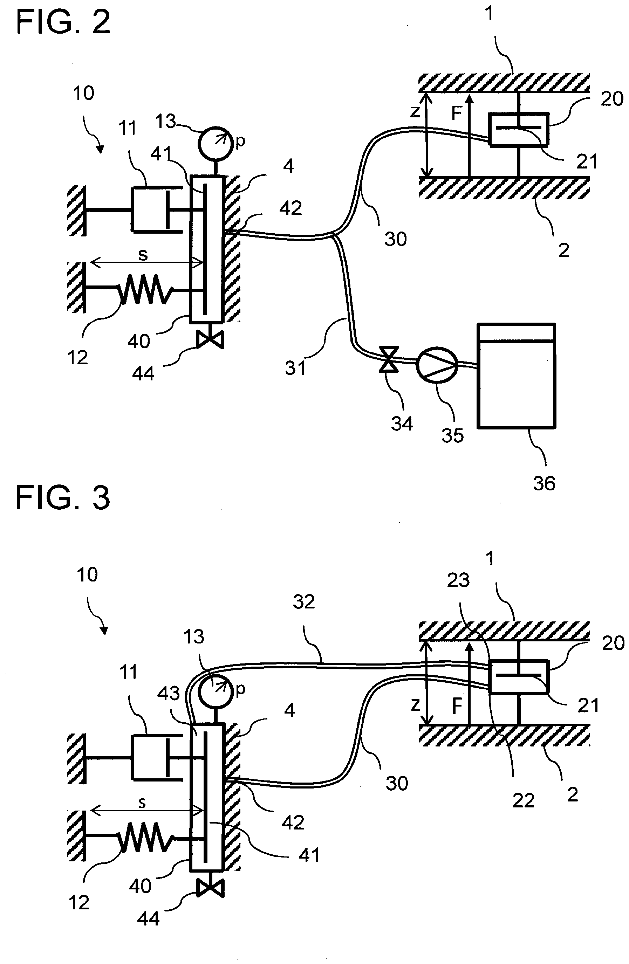

Gemäß dem in Figur 2 gezeigten Ausführungsbeispiel ist ein Fluidreservoir 36 vorgesehen, das über eine weitere Fluidleitung 31 mit der ersten Fluidleitung 30 verbunden ist und über ein Ventil 34 und eine Fluidpumpe 35 fluidisch mit dem Fluidkreis zwischen den beiden Hubzylindern 20, 40 gekoppelt werden kann. Dies ermöglicht eine Niveauregulierung an der Lagerstelle. So kann beispielsweise durch Entnahme von Fluid aus der Fluidleitung 30 der Abstand zwischen Motor 1 und Rahmen 2 verringert werden. Hierzu wird das Ventil 34 geöffnet, so dass das Fluid in das Fluidreservoir 36 einströmen kann. Umgekehrt kann durch Pumpen von Fluid aus dem Fluidreservoir 36 in die Fluidleitung 30 der Abstand zwischen Motor und Rahmen auf ein neues gewünschtes Sollniveau erhöht werden. So kann beispielsweise bei Überlandfahrten der Fahrzeugschwerpunkt tiefergelegt und bei unebenen Streckenverläufen durch Erhöhung des Fluidvolumens ein größerer Schwingungsbereich ermöglicht werden.

Gemäß dem in Figur 3 gezeigten Ausführungsbeispiel ist neben der ersten Fluidleitung 30 eine zweite Fluidleitung 32 vorgesehen, um den ersten Hydraulikzylinder 20 mit dem zweiten Hydraulikzylinder 40 fluidisch zu koppeln. Hierbei münden die erste Fluidleitung 30 und die zweite Fluidleitung 32 jeweils auf gegenüberliegenden Seiten der Kolben 21, 41 der Hydraulikzylinder 20, 40, insbesondere an gegenüberliegenden Endbereichen 22, 23, 42, 43 in die Hydraulikzylinder 20, 40. Das Vorsehen der zweiten Hydraulikleitung 32 ermöglicht ein direkteres und verbessertes Übertragungsverhalten, um die Lagerreaktion von dem ersten Hydraulikzylinder 20 an den zweiten Hydraulikzylinder 40 zu übertragen bzw. um die Gegenreaktion der Feder-Dämpfer-Vorrichtung 10 an den ersten Hydraulikzylinder 20 rückzukoppeln.

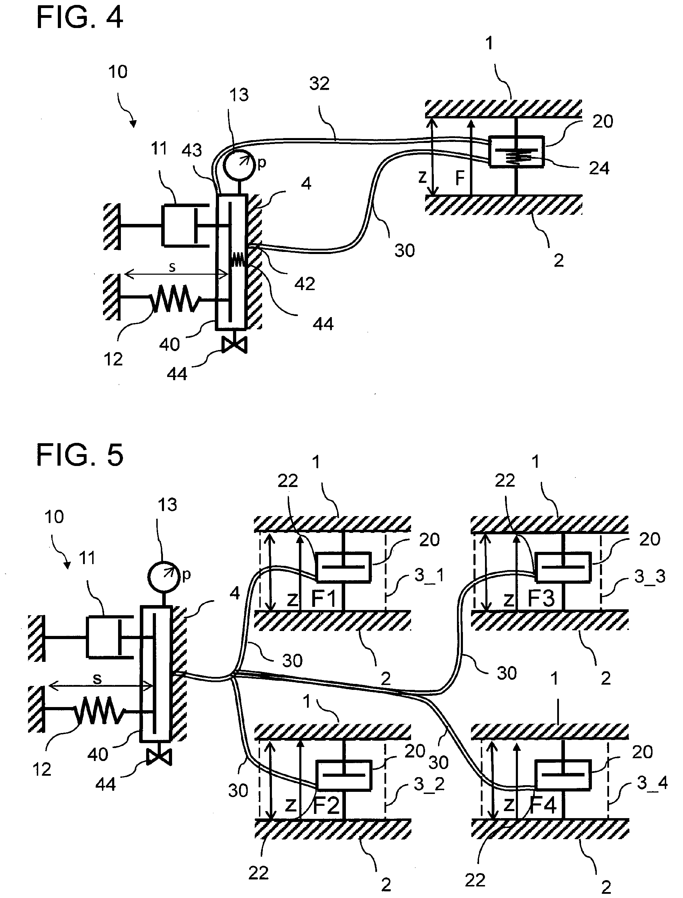

Gemäß dem in Figur 4 gezeigten Ausführungsbeispiel sind die Hydraulikzylinder 20, 40 durch Federelemente 24, 44 vorgespannt, um beispielsweise eine gewünschte Ruheposition durch entsprechende Wahl der Vorspannung einstellen zu können. Dies vermeidet auch ein unkontrolliertes Absacken des Motors bei einem Leck der Hydraulikleitung. Selbstverständlich ist das Vorspannen der Hydraulikzylinder auch ohne das Vorsehen der zweiten Hydraulikleitung 32 möglich.

Die in den Figuren 5 bis 7 gezeigten Ausführungsbeispiele illustrieren den besonderen Vorzug der Erfindung, wonach mit nur einer Feder-Dämpfer-Vorrichtung mehrere Lagerstellen schwingungsgedämpft werden können.

In der Figur 5 sind beispielsweise vier Lagerstellen $3\_1$, $3\_2$, $3\_3$ und $3\_4$ dargestellt, an denen der Motor 1 jeweils durch einen Hydraulikzylinder 20, wie zuvor beschrieben, schwingend auf dem Rahmen 2 gelagert ist. Jeder dieser ersten Hydraulikzylinder 20 ist mit einer Hydraulikleitung 30 mit dem zweiten Hydraulikzylinder 40 fluidisch verbunden. Durch die gezeigte Parallelschaltung liegt der gleiche Druck an allen Lagerstellen an. Die anliegende Kraft ist abhängig von der dem Fluid zugewandten Kolbenfläche A der Kolben 21 der ersten Hydraulikzylinder 20, die von Kolben zu Kolben unterschiedlich sein kann. Die vorliegende Anordnung führt somit zu einem konstanten Verhältnis der Lagerkräfte: $F_1/F_2/F_3/F_4 = A_1/A_2/A_3/A_4$. Dies kann zur Minimierung der Lagerkräfte und zur Optimierung der Krafteinleitung in den Fahrzeugrahmen für eine optimale Gewichtsverteilung genutzt werden.

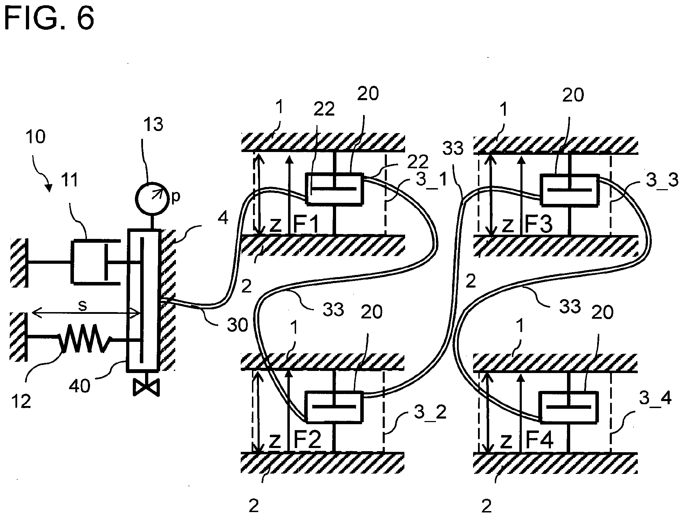

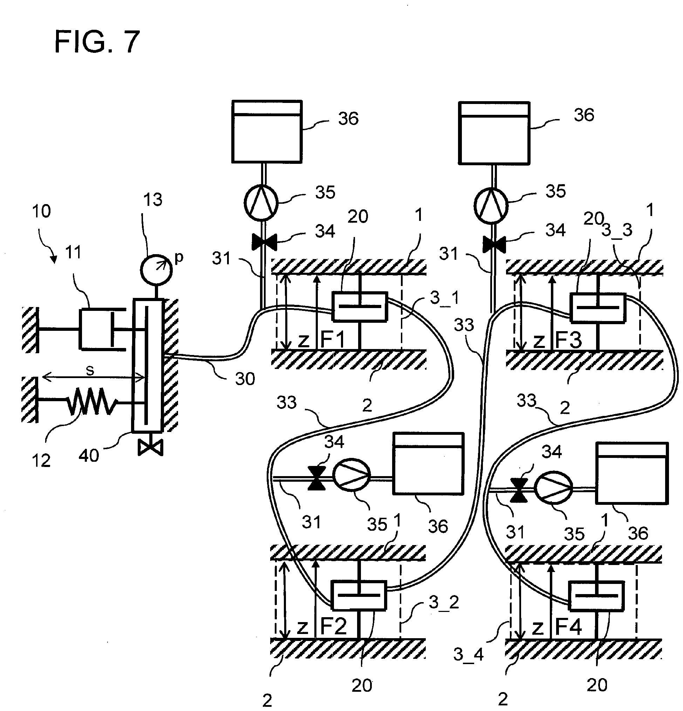

Eine Abwandlung dieses Ausführungsbeispiels ist in Figur 6 gezeigt. Hier sind die einzelnen Lagerstellen $3\_1$, $3\_2$, $3\_3$ und $3\_4$ über Fluidleitungen 33, die jeweils zwei erste Hydraulikzylinder 20 verbinden, jeweils in Serie geschaltet. Hierbei ist der obere Endbereich des Hydraulikzylinders 20 der ersten Lagerstelle $3\_1$ über eine Hydraulikleitung 33 mit dem unteren Endbereich des Hydraulikzylinders 20 der zweiten Lagerstelle $3\_2$ verbunden. Der obere Endbereich des Hydraulikzylinders 20 der zweiten Lagerstelle $3\_2$ ist mit dem unteren Endbereich des Hydraulikzylinders 20 der dritten Lagerstelle $3\_3$ verbunden, und der obere Endbereich des Hydraulikzylinders 20 der dritten Lagerstelle $3\_3$ ist mit dem unteren Endbereich des Hydraulikzylinders 20 der vierten Lagerstelle $3\_4$ verbunden. Dies führt zu einem konstanten Verhältnis der Lagerverschiebungen $z_i$ an den Lagern $3\_i$: $z_1 * A_1 = z_2 * A_2 = z_3 * A_3 = z_4 * A_4$ und kann beispielsweise zur Wankstabilisierung eingesetzt werden. Mit diesem Ausführungsbeispiel kann eine Plattform so auf einem Rahmen schwingungsgedämpft gelagert werden, dass diese sich immer parallel zu dem Rahmen bewegt. Um einen gewünschten Winkel zwischen Plattform und Rahmen einzustellen zu können, können ferner, wie in Fig. 7 gezeigt, Fluidreservoirs 36 an jeder Lagerstelle angeordnet werden, um das Fluidvolumen an jedem Lager so anzupassen, dass ein gewünschter Abstand zwischen Motor 1 und Rahmen 3 eingestellt wird.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. So ist es selbstverständlich möglich, die verschiedenen Ausführungsbeispiele miteinander zu kombinieren. Ferner kann das erfindungsgemäße Feder-Dämpfer-System nicht nur als Motorlager, sondern auch als Fahrwerksdämpfer, Kabinenlagerung, zur Maschinenlagerung oder allgemein in passiven und aktiven Lagern eingesetzt werden. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

**Bezugszeichenliste**

| | |
|---|---|
| 1 | Last, insbesondere Motor |
| 2 | erste Abstützeinheit, insbesondere Motorrahmen |
| 3 | Lager- bzw. Dämpfungsstelle |
| 4 | zweite Abstützeinheit, insbesondere Fahrzeugkarosserie |
| 5 | Steuergerät |
| 6 | Steuerleitung |
| 7 | Linearführung |
| 8 | Drehgelenk |
| 10 | Feder-Dämpfer-Vorrichtung |
| 11 | Dämpferelement |
| 12 | Federelement |
| 13 | Manometer |
| 14 | Sensor |
| 15 | Sensorsteuerleitungen |
| 16 | Aktuatorsteuerleitungen |
| 20, 40 | Hydraulikzylinder |
| 21, 41 | Kolben |
| 22, 42 | Unterer Endbereich Hydraulikzylinder |
| 23, 43 | Oberer Endbereich Hydraulikzylinder |
| 30, 31, 32, 33 | Hydraulikleitung |
| 34 | Ventil |
| 35 | Pumpe |
| 36 | Fluidreservoir |
| 44 | Überdruckventil |
| F | Lagerkraft |
| z | Lagerverschiebung |
| p | Druck |
| s | Federweg |

**Patentansprüche**

1. Feder-Dämpfer-System zur Verwendung in Lagern oder als Dämpfer, mit einer Feder-Dämpfer-Vorrichtung (10), die federnde und dämpfende Eigenschaften aufweist; und einer Kopplungsvorrichtung (20, 30, 40), die an einer Lager- oder Dämpfungsstelle (3) mit einer Last (1) und einer Abstützeinrichtung (2) koppelbar ist oder die an einer Mehrzahl von Lager- oder Dämpfungsstellen mit der Last (1) und der Abstützeinrichtung (2) koppelbar ist, um die Last (1) auf der Abstützeinrichtung (2) schwingbar zu lagern, und die ausgebildet ist, einen von der Last (1) erzeugten Lasteintrag im Wesentlichen verlustfrei auf die Feder-Dämpfer-Vorrichtung (10) zu übertragen und eine Reaktion hierauf von der Feder-Dämpfer-Vorrichtung (10) aufzunehmen und an die Last (1) rückzukoppeln, um dem Lasteintrag schwingungsdämpfend entgegenzuwirken, **dadurch gekennzeichnet, dass** die Kopplungsvorrichtung (20, 30, 40) einen ersten fluidischen Hubzylinder (20) umfasst, der an der Lager- oder Dämpfungsstelle (3) angeordnet ist, und einen zweiten fluidischen Hubzylinder (40) umfasst, wobei die Hubzylinder (20, 40) über eine erste Fluidleitung (30) bewegungsgekoppelt sind, wobei der zweite Hubzylinder (40) an der Feder-Dämpfer-Vorrichtung (10) angeordnet und mit dieser gekoppelt ist, so dass der zweite Hubzylinder und die Feder-Dämpfer-Vorrichtung (10) in Wirkverbindung stehen, wobei die Feder-Dämpfer-Vorrichtung (10) räumlich getrennt von der Lager- oder Dämpfungsstelle (3) angeordnet ist, so dass diese außerhalb eines zwischen der Last (1) und der Abstützeinrichtung (2) ausgebildeten Zwischenraums angeordnet ist.

2. Feder-Dämpfer-System nach Anspruch 1, **dadurch gekennzeichnet, dass** die Feder-Dämpfer-Vorrichtung (10) als Sensor-Aktoreinheit ausgebildet ist und eingerichtet ist, den übertragenen Lasteintrag zu erfassen und dem übertragenen Lasteintrag aktorisch entgegenzuwirken und/oder dass die Kopplungsvorrichtung (20, 30, 40) an einer Mehrzahl von Lager- oder Dämpfungsstellen mit der Last (1) und der Abstützeinrichtung (2) koppelbar ist.

3. Feder-Dämpfer-System nach Anspruch 1 oder 2, **dadurch gekennzeichnet, dass** die Feder-Dämpfer-Vorrichtung (10)

   a) einen ersten Sensor (13) umfasst, der ausgeführt ist, eine von einer Lagerkraft (F) des Lasteintrags abhängige erste Steuergröße zu bestimmen, und/oder einen zweiten Sensor (14) umfasst, der ausgeführt ist, eine von einer Lagerverschiebung (z) des Lasteintrags abhängige zweite Steuergröße zu bestimmen, und
   b) ausgeführt ist, in Abhängigkeit der bestimmten Steuergröße(n) die Dämpfungseigenschaften und/oder die Federungseigenschaften der Feder-Dämpfer-Vorrichtung (10) zu verändern und/oder aktorisch eine Gegenkraft zum übertragenen Lasteintrag zu erzeugen.

4. Feder-Dämpfer-System nach einem der vorhergehenden Ansprüche, **dadurch gekennzeichnet, dass** der erste Hubzylinder ein hydraulischer Hubzylinder (20) ist und dass der zweite Hubzylinder ein hydraulischer Hubzylinder (40) ist.

**5.** Feder-Dämpfer-System nach Anspruch 4, wenn von Anspruch 3 abhängig, **dadurch gekennzeichnet, dass** der erste Sensor als Drucksensor (13) ausgebildet ist und die Feder-Dämpfer-Vorrichtung (10) eingerichtet ist, als erste Steuergröße einen Fluiddruck (p) im zweiten Hubzylinder (40) zu bestimmen und/oder dass der zweite Sensor (14) als zweite Steuergröße einen Federweg (s) der Feder-Dämpfer-Vorrichtung (10) erfasst.

**6.** Feder-Dämpfer-System nach einem der vorhergehenden Ansprüche 4 oder 5, **gekennzeichnet durch** ein Fluidreservoir (36), das mit einem durch die ersten und zweiten Hubzylinder (20, 40) und der ersten Fluidleitung (30) gebildeten Fluidkreis zur Variierung des Fluidvolumens im Fluidkreis verbindbar ist.

**7.** Feder-Dämpfer-System nach einem der vorhergehenden Ansprüche 4 bis 6, **gekennzeichnet durch** eine zweite Fluidleitung (32), über die die ersten und zweiten Hubzylinder (20, 40) bewegungsgekoppelt sind, wobei die erste Fluidleitung (30) und die zweite Fluidleitung (32) jeweils auf gegenüberliegenden Seiten (22, 23, 42, 43) eines Hubkolbens (21, 41) der Hubzylinder in die Hubzylinder (20, 40) münden.

**8.** Feder-Dämpfer-System nach einem der vorhergehenden Ansprüche 4 bis 7, **dadurch gekennzeichnet, dass** der erste und/oder der zweite Hubzylinder (20, 40) vorgespannt sind.

**9.** Feder-Dämpfer-System nach einem der vorhergehenden Ansprüche 4 bis 8, **dadurch gekennzeichnet, dass** die Kopplungsvorrichtung (20, 30, 40) eine Mehrzahl von ersten Hubzylindern (20) umfasst, die jeweils an verschiedenen Lager- oder Dämpfungsstellen (3_1, 3_2, 3_3, 3_4) mit der Last (1) und der Abstützeinrichtung (2) koppelbar sind, wobei die Mehrzahl von ersten Hubzylindern (20) in Parallelschaltung oder Reihenschaltung fluidisch mit dem zweiten Hubzylinder (40) bewegungsgekoppelt sind, wobei vorzugsweise jedem der ersten Hubzylinder (20) ein separates Fluidreservoir (36) zugeordnet ist zur Variierung des Fluidvolumens im zugeordneten ersten Hubzylinder (20).

**10.** Feder-Dämpfer-System nach einem der vorhergehenden Ansprüche, **dadurch gekennzeichnet, dass** eine Federeigenschaft und eine Dämpfungseigenschaft der Feder-Dämpfer-Vorrichtung (10) jeweils durch getrennte Bauteile oder durch ein Bauteil bereitgestellt werden.

**11.** Feder-Dämpfer-System nach einem der vorhergehenden Ansprüche, **dadurch gekennzeichnet, dass** die Feder-Dämpfer-Vorrichtung (10) umfasst:

a) ein dynamisch verstellbares Dämpfungselement (11), insbesondere ein elektrorheologisch oder magnetorheologisch arbeitendes Dämpfungselement; und/oder

b) ein Federelement (12) mit dynamisch verstellbarer Härte, insbesondere eine mechanische Feder mit variabler Vorspannung oder eine Gasfeder mit variablem Volumen oder Füllmenge; und/oder

c) eine Schwingspule.

**12.** Feder-Dämpfer-System nach einem der vorhergehenden Ansprüche 4 bis 11, **dadurch gekennzeichnet, dass** die Hubzylinder als Hydraulikzylinder (20, 40) ausgebildet sind und ein inkompressibles, niedrig viskoses Fluid enthalten.

**13.** Feder-Dämpfer-System nach einem der vorhergehenden Ansprüche 1 bis 3, **dadurch gekennzeichnet, dass** die Kopplungsvorrichtung als Hebelwerk ausgebildet ist.

**14.** Feder-Dämpfer-System nach einem der vorhergehenden Ansprüche 2 bis 13, **dadurch gekennzeichnet, dass** die Feder-Dämpfer-Vorrichtung als Linearmotor ausgebildet ist, der in Abhängigkeit des erfassten Lasteintrags so ausgesteuert wird, dass der Linearmotor Elastizitäts- und Dämpfungseigenschaften erzeugt, die dem übertragenen Lasteintrag aktorisch entgegenwirken.

**15.** Feder-Dämpfer-System nach einem der vorhergehenden Ansprüche, **dadurch gekennzeichnet, dass**

a) die Abstützeinrichtung (2) ein Motorrahmen und die Last (1) ein Motor ist; oder

b) die Abstützeinrichtung (2) eine Fahrzeugkarosserie und die Last (1) ein Fahrwerk oder eine Ladevorrichtung eines Fahrzeugs ist; oder

c) die Abstützeinrichtung (2) eine Tragstruktur für einen Fahrzeugsitz ist; oder

d) die Abstützeinrichtung (2) eine schwingungssteife Struktur und die Last (1) eine Maschine oder eine Montage- oder Transportvorrichtung ist.

**16.** Aktives schwingungsdämpfendes Lager mit einem Feder-Dämpfer-System nach einem der vorhergehenden Ansprüche 2 bis 15, insbesondere ein Motorlager, ein Fahrwerkslager oder ein Maschinenlager.

**Claims**

**1.** Spring-damper system for use in bearings or as a damper, having

a spring-damper device (10) which has springing and damping properties; and

a coupling device (20, 30, 40) which can be coupled to a load (1) and to a supporting device (2) at a bearing or damping point (3) or which can be coupled to the load (1) and the supporting device (2) at a plurality of bearing or damping points, in order to mount the load (1) in such a way that it can vibrate on the supporting device (2), and which is designed to transmit a load input, generated by the load (1), substantially without loss to the spring-damper device (10) and to absorb a reaction thereto by the spring-damper device (10) and to feed said reaction back to the load (1) in order to counteract the load input in a vibration-damping fashion,

**characterized in that** the coupling device (20, 30, 40) comprises a first fluidic lifting cylinder (20) which is arranged at the bearing or damping point (3), and a second fluidic lifting cylinder (40), wherein the lifting cylinders (20, 40) are movably coupled via a first fluid line (30), wherein the second lifting cylinder (40) is arranged at the spring-damper device (10) and is coupled thereto such that the second lifting cylinder and the spring-damper device (10) are operatively connected,

wherein the spring-damper device (10) is arranged spatially separate from the bearing or damping point (3) such that it is arranged outside an intermediate space formed between the load (1) and the supporting device (2).

2. Spring-damper system according to Claim 1, **characterized in that** the spring-damper device (10) is embodied as a sensor actuator unit and is configured to detect the transmitted load input and to counteract the transmitted load input by actuator means, and/or **in that** the coupling device (20, 30, 40) can be coupled to the load (1) and to the supporting device (2) at a plurality of bearing or damping points.

3. Spring-damper system according to Claim 1 or 2, **characterized in that** the spring-damper device (10)

   a) comprises a first sensor (13) which is designed to determine a first control variable which is dependent on a bearing force (F) of the load input, and/or comprises a second sensor (14) which is designed to determine a second control variable which is dependent on a bearing displacement (z) of the load input, and
   b) is designed to change the damping properties and/or the spring properties of the spring-damper device (10) and/or to generate an opposing force to the transmitted load input by actuator means, as a function of the determined control variable or variables.

4. Spring-damper system according to one of the preceding claims, **characterized in that** the first lifting cylinder is a hydraulic lifting cylinder (20) and **in that** the second lifting cylinder is a hydraulic lifting cylinder (40).

5. Spring-damper system according to Claim 4, if dependant on Claim 3, **characterized in that** the first sensor is embodied as a pressure sensor (13), and the spring-damper device (10) is configured to determine, as a first control variable, a fluid pressure (p) in the second lifting cylinder (40), and/or **in that** the second sensor (14) detects, as a second control variable, a spring travel(s) of the spring-damper device (10).

6. Spring-damper system according to one of the preceding Claims 4 or 5, **characterized by** a fluid reservoir (36) which can be connected to a fluid circuit, formed by the first and second lifting cylinders (20, 40) and the first fluid line (30), for varying the fluid volume in the fluid circuit.

7. Spring-damper system according to one of the preceding Claims 4 to 6, **characterized by** a second fluid line (32) via which the first and second lifting cylinders (20, 40) are movably coupled, wherein the first fluid line (30) and the second fluid line (32) respectively open into the lifting cylinders (20, 40) on opposite sides (22, 23, 42, 43) of a reciprocating piston (21, 41) of the lifting cylinders.

8. Spring-damper system according to one of the preceding Claims 4 to 7, **characterized in that** the first and/or the second lifting cylinders (20, 40) are prestressed.

9. Spring-damper system according to one of the preceding Claims 4 to 8, **characterized in that** the coupling device (20, 30, 40) comprises a plurality of first lifting cylinders (20) which can each be coupled to the load (1) and to the supporting device (2) at various bearing or damping points (3_1, 3_2, 3_3, 3_4), wherein the plurality of first lifting cylinders (20) are fluidically coupled in a movable fashion to the second lifting cylinder (40) in a parallel or series connection, wherein each of the first lifting cylinders (20) is preferably assigned a separate fluid reservoir (36) for varying the fluid volume in the assigned first lifting cylinder (20).

10. Spring-damper system according to one of the preceding claims, **characterized in that** a spring property and a damping property of the spring-damper device (10) are each made available by separate components or by one component.

11. Spring-damper system according to one of the preceding claims, **characterized in that** the spring-damper device (10) comprises:

a) a dynamically adjustable damping element (11), in particular a damping element which operates in an electrorheological or magnetorheological fashion; and/or
b) a spring element (12) with a dynamically adjustable hardness, in particular a mechanical spring with variable prestress or a gas spring with a variable volume or filling quantity; and/or
c) a moving coil.

12. Spring-damper system according to one of the preceding Claims 4 to 11, **characterized in that** the lifting cylinders are embodied as hydraulic cylinders (20, 40) and contain an incompressible fluid of low viscosity.

13. Spring-damper system according to one of the preceding Claims 1 to 3, **characterized in that** the coupling device is embodied as a lever mechanism.

14. Spring-damper system according to one of the preceding Claims 2 to 13, **characterized in that** the spring-damper device is embodied as a linear motor which is controlled as a function of the detected load input in such a way that the linear motor generates elasticity and damping properties which counteract the transmitted load input by actuator means.

15. Spring-damper system according to one of the preceding claims, **characterized in that**

a) the supporting device (2) is an engine frame, and the load (1) is an engine; or
b) the supporting device (2) is a vehicle body, and the load (1) is a chassis or a loading device of a vehicle; or
c) the supporting device (2) is a supporting structure for a vehicle seat; or
d) the supporting device (2) is a structure which is rigid with respect to vibration, and the load (1) is a machine or an assembly device or transportation device.

16. Active vibration-damping bearing with a spring-damper system according to one of the preceding Claims 2 to 15, in particular an engine bearing, a chassis bearing or a machine bearing.

**Revendications**

1. Système ressort-amortisseur destiné à une utilisation dans des supports ou comme amortisseur, avec un dispositif à ressort-amortisseur (10), qui présente des propriétés de ressort et d'amortisseur; et avec un dispositif de couplage (20, 30, 40), qui peut être couplé à un point de support ou d'amortissement (3) avec une charge (1) et un dispositif d'appui (2) ou qui peut être couplé à une multiplicité de points de support ou d'amortissement avec la charge (1) et le dispositif d'appui (2), afin de supporter la charge (1) de façon oscillante sur le dispositif d'appui (2), et qui est configuré pour transmettre une application de charge produite par la charge (1) essentiellement sans perte au dispositif à ressort-amortisseur (10) et à reprendre une réaction à celle-ci par le dispositif à ressort-amortisseur (10) et à la renvoyer à la charge (1), afin de s'opposer à l'application par amortissement oscillant, **caractérisé en ce que** le dispositif de couplage (20, 30, 40) comprend un premier cylindre de levage fluidique (20), qui est disposé au point de support ou d'amortissement (3), et comprend un second cylindre de levage fluidique (40), dans lequel les cylindres de levage (20, 40) sont couplés en mouvement par une première conduite de fluide (30), dans lequel le second cylindre de levage (40) est disposé sur le dispositif à ressort-amortisseur (10) et est couplé à celui-ci, de telle manière que le second cylindre de levage et le dispositif à ressort-amortisseur (10) soient en liaison active, dans lequel le dispositif à ressort-amortisseur (10) est spatialement séparé du point de support ou d'amortissement (3), de telle manière que celui-ci soit situé à l'extérieur d'un espace intermédiaire formé entre la charge (1) et le dispositif d'appui (2).

2. Système ressort-amortisseur selon la revendication 1, **caractérisé en ce que** le dispositif à ressort-amortisseur (10) est formé par une unité à capteur-actionneur et est conçu pour détecter l'application de charge transmise et pour s'opposer par l'actionneur à l'application de charge transmise et/ou **en ce que** le dispositif de couplage (20, 30, 40) peut être couplé à une multiplicité de points de support ou d'amortissement avec la charge (1) et le dispositif d'appui (2).

3. Système ressort-amortisseur selon la revendication 1 ou 2, **caractérisé en ce que** le dispositif à ressort-amortisseur (10)

a) comprend un premier capteur (13), qui est conçu pour déterminer une première grandeur de commande dépendant de la force de support (F) de l'application de charge, et/ou comprend un second capteur (14), qui est conçu pour déterminer une seconde grandeur de commande dépendant d'un déplacement de support (z) de l'application de charge, et
b) est conçu pour modifier, en fonction de la/des grandeur(s) de commande déterminée(s), les propriétés d'amortissement et/ou les propriétés de ressort du dispositif à ressort-amortissement (10) et pour produire par l'actionneur une force s'opposant à l'application de charge transmise.

**4.** Système ressort-amortisseur selon l'une quelconque des revendications précédentes, **caractérisé en ce que** le premier cylindre de levage est un cylindre de levage hydraulique (20) et **en ce que** le second cylindre de levage est un cylindre de levage hydraulique (40).

**5.** Système ressort-amortisseur selon la revendication 4, lorsqu'elle dépend de la revendication 3, **caractérisé en ce que** le premier capteur est constitué par un capteur de pression (13) et le dispositif à ressort-amortisseur (10) est conçu pour déterminer comme première grandeur de commande une pression de fluide (p) dans le second cylindre de levage (40) et/ou **en ce que** le second capteur (14) détecte comme seconde grandeur de commande une course de ressort (s) du dispositif à ressort-amortisseur (10) .

**6.** Système ressort-amortisseur selon l'une quelconque des revendications précédentes 4 ou 5, **caractérisé par** un réservoir de fluide (36), qui peut être raccordé à un circuit de fluide formé par le premier et le second cylindres de levage (20, 40) et à la première conduite de fluide (30), pour la variation du volume de fluide dans le circuit de fluide.

**7.** Système ressort-amortisseur selon l'une quelconque des revendications précédentes 4 à 6, **caractérisé par** une seconde conduite de fluide (32), par laquelle le premier et le second cylindres de levage (20, 40) sont couplés en mouvement, dans lequel la première conduite de fluide (30) et la seconde conduite de fluide (32) débouchent dans les cylindres de levage (20, 40) respectivement sur des côtés opposés (22, 23, 42, 43) d'un piston de levage (21, 41) des cylindres de levage.

**8.** Système ressort-amortisseur selon l'une quelconque des revendications précédentes 4 à 7, **caractérisé en ce que** le premier et le second cylindres de levage (20, 40) sont précontraints.

**9.** Système ressort-amortisseur selon l'une quelconque des revendications précédentes 4 à 8, **caractérisé en ce que** le dispositif de couplage (20, 30, 40) comprend une multiplicité de premiers cylindres de levage (20), qui peuvent être couplés respectivement à plusieurs points de support ou d'amortissement (3_1, 3_2, 3_3, 3_4) avec la charge (1) et le dispositif d'appui (2), dans lequel la multiplicité de premiers cylindres de levage (20) sont fluidiquement couplés en mouvement, en parallèle ou en série, au second cylindre de levage (40), dans lequel un réservoir de fluide séparé (36) est de préférence associé à chacun des premiers cylindres de levage (20), pour la variation du volume de fluide dans le premier cylindre de levage associé (20).

**10.** Système ressort-amortisseur selon l'une quelconque des revendications précédentes, **caractérisé en ce qu'**une propriété de ressort et une propriété d'amortissement du dispositif à ressort-amortisseur (10) sont fournies respectivement par des composants séparés ou par un composant.

**11.** Système ressort-amortisseur selon l'une quelconque des revendications précédentes, **caractérisé en ce que** le dispositif à ressort-amortisseur (10) comprend:

a) un élément d'amortissement réglable de façon dynamique (11), en particulier un élément d'amortissement opérant de façon électrorhéologique ou magnétorhéologique; et/ou
b) un élément de ressort (12) avec une raideur réglable de façon dynamique, en particulier un ressort mécanique avec une précontrainte variable ou un ressort pneumatique avec un volume ou une capacité de remplissage variable; et/ou
c) une bobine mobile.

**12.** Système ressort-amortisseur selon l'une quelconque des revendications précédentes 4 à 11, **caractérisé en ce que** les cylindres de levage sont constitués par des cylindres hydrauliques (20, 40) et contiennent un fluide incompressible, faiblement visqueux.

**13.** Système ressort-amortisseur selon l'une quelconque des revendications précédentes 1 à 3, **caractérisé en ce que** le dispositif de couplage est constitué par un mécanisme de leviers.

**14.** Système ressort-amortisseur selon l'une quelconque des revendications précédentes 2 à 13, **caractérisé en ce que** le dispositif à ressort-amortisseur est constitué par un moteur linéaire, qui est commandé en fonction de l'application de charge détectée, de telle manière que le moteur linéaire produise des propriétés d'élasticité et d'amortissement, qui s'opposent par l'actionneur à l'application de charge transmise.

**15.** Système ressort-amortisseur selon l'une quelconque des revendications précédentes, **caractérisé en ce que**

a) le dispositif d'appui (2) est un bâti de moteur et la charge (1) est un moteur; ou
b) le dispositif d'appui (2) est une carrosserie de véhicule et la charge (1) est un train de roulement ou un dispositif de chargement d'un véhicule; ou
c) le dispositif d'appui (2) est une structure portante pour un siège de véhicule; ou

d) le dispositif d'appui (2) est une structure stable aux oscillations et la charge (1) est une machine ou un dispositif de montage ou de transport.

16. Support actif à amortissement oscillant avec un système ressort-amortisseur selon l'une quelconque des revendications précédentes 2 à 15, en particulier un support de moteur, un support de train de roulement ou un support de machine.

# FIG. 1

# FIG. 2

# FIG. 3

# FIG. 4

# FIG. 5

## FIG. 6

# FIG. 7

# FIG. 8A

# FIG. 8B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005029234 A1
- CN 101865237 A
- US 2010072760 A1
- DE 102005045992 A1

**In der Beschreibung aufgeführte Nicht-Patentliteratur**

- MTZ - Motortechnische Zeitschrift. Januar 2013, vol. 74, 55-59